# EUROPEAN PATENT APPLICATION

(11) **EP 4 280 656 A1**
(43) Date of publication of application: **22.11.2023**
(21) Application number: 21918677.2
(22) Date of filing: 18.01.2021
(51) Int. Cl.: H04W 24/02, H04W 72/04

(54) **BEAM RECOVERY METHOD FOR MULTI-TRP SYSTEM, COMMUNICATION DEVICE, AND READABLE STORAGE MEDIUM**

(71) Applicant: JRD Communication (Shenzhen) Ltd, Shenzhen, Guangdong 518052 (CN)
(72) Inventor: LI, Tian, Shenzhen, Guangdong 518052 (CN); SHENG, Jia, Shenzhen, Guangdong 518052 (CN); TIAN, Maoxin, Shenzhen, Guangdong 518052 (CN)
(74) Representative: Murgitroyd & Company
(86) International application number: PCT/CN2021/072506
(87) International publication number: WO 2022/151477

(57) **Abstract**

The present application discloses a beam recovery method for a multi-TRP system. The method is executed on a user equipment side, and comprises: when a beam failure event is detected, obtaining, by means of at least one preset dedicated SR resource, at least one PUCCH resource configured, the PUCCH resource being used for carrying the beam failure event for transmission; and selecting a TRP to be reported and a first beam, and using the first beam to transmit the beam failure event to said TRP on the PUCCH resource to cause the base station to reconfigure a beam for transmission.

## Description

### BACKGROUND OF INVENTION

### Technical Field

The present application relates to the field of wireless communication, and in particular, to a beam recovery method, a communication device, and a readable storage medium for a multi-TRP system.

### Related Art

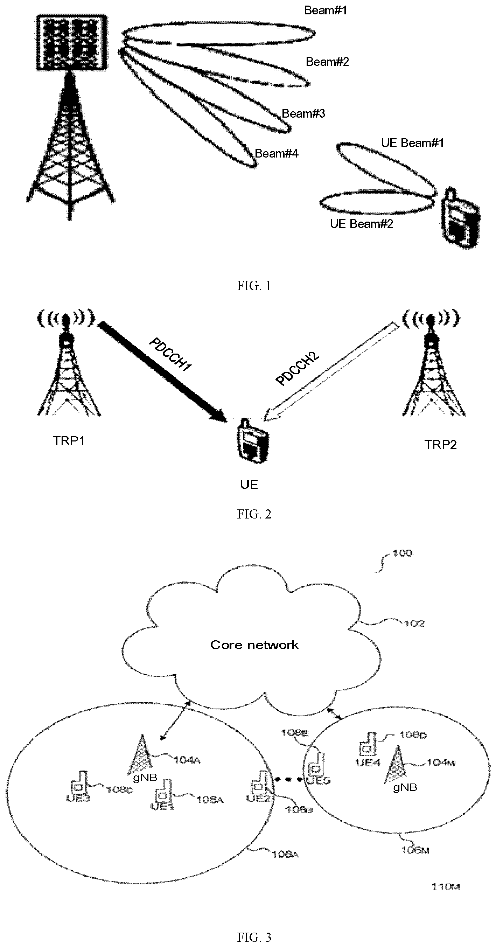

Multiple beams can be configured at both the base station and the user equipment (UE: User Equipment) to cover a larger angle. If the transmit and receive beams between the base station and the UE are aligned, a greater link gain can be obtained. The process of aligning the transmission and reception beams of the base station and the UE is called a beam management process. The beam management process includes beam selection, beam measurement, beam reporting, beam indication and beam recovery. As shown in FIG. 1, for a single transmission/reception point (TRP) system, it is assumed that the base station is configured with 4 beams and the UE is configured with 2 beams. After the beam management process, the beam #3 of the base station and the UE's beam # 1 can be selected for transmission reception.

If the beam is blocked, it will cause communication interruption, especially for the high-frequency beam, which has short wavelength, poor reflection and diffraction performance, and most of the transmitted energy is concentrated in the straight propagation path. Therefore, it is necessary to design a beam recovery mechanism that can quickly recover from beam blockage and ensure the reliability and robustness of control channel transmission. The beam recovery mechanism mainly includes beam failure detection, beam failure reporting, and beam recovery process. Downlink beam transmission failure is defined as the quality of each Physical Downlink Control Channel (PDCCH) beam monitored by the UE is lower than a specified threshold, so that the UE cannot effectively receive the control information sent by the PDCCH. After the UE determines that the beam transmission failure event occurs, it reports the event to the base station and reports the new candidate beam information. According to the received report information, the base station recovers from the beam failure as soon as possible through the beam recovery process, and reselects a new beam for transmission to replace the original beam.

The master cell group (MCG) and the secondary cell group (SCG) are concepts under dual connectivity (DC). It can be understood that the group in which the cell where the UE initiates random access first is the MCG. Under the MCG, there may be many cells, one of which is used to initiate initial access, and this cell is called a primary cell (PCell). The PCell under the MCG and the secondary cell (SCell) under the MCG are combined via carrier aggregation (CA) technology. Similarly, there will also be a most important cell under the SCG, that is, the primary secondary cell (PSCell), which can also be understood as the cell that initiates the initial access under the SCG. PSCell under SCG and SCell under SCG are also combined through CA technology. In a New Radio (NR) system, many signalings are only sent on PCell and PSCell.

In a multi-TRP (i.e.,: Multiple DCIs based Multiple TRPs) system based on multiple downlink control information (DCI), as shown in FIG. 2, two transmission and reception nodes TRP1 and TRP2 respectively schedule a user equipment, In such a system, these TRPs can perform independent scheduling on the UE, such as resource allocation or other control information. High-layer signaling can configure up to 5 control resource sets (CORESETs), and these CORESETs are divided into several groups, and the group identifier is used to indicate the TRP identifier. For example, in Rel-16 (Release-16), CORESET is divided into two groups according to the parameter CORESETPoolIndex under the high-level parameter ControlResourceSet, each group is marked with CORESETPoolIndex, and CORESETPoolIndex is used to distinguish different TRPs. That is, if CORESETPoolIndex is 0, this group CORESET is associated with the first TRP. If CORESETPoolIndex is 1, this group of CORESETs is associated with the second TRP. Through the high-level parameter CORESETPoolIndex, the UE can identify two different TRPs.

At the 3GPP RAN1#103e conference, various companies reached an agreement on the TRP-level beam recovery mechanism, based on the SCell beam recovery mechanism in Rel-16. For the design method of the physical uplink control channel (PUCCH) resource for reporting beam failure events, two options are tentatively determined. In the first option, a cell group (Cell Group) supports at most one scheduling request dedicated (SR)-based PUCCH resources. In the second option, a cell group (Cell Group) supports at most two or more dedicated SR-based PUCCH resources. Regarding the design of the medium access control (MAC) layer control element (MAC CE) carrying the beam failure recovery request (BFRQ), it is still necessary to further study whether it is necessary to include the beam failure TRP index value, component carrier (CC) index value, new candidate beam indication (if found to meet the requirements), and whether a new candidate beam identity is found, etc.

### SUMMARY OF THE INVENTION

In order to solve the above-identified problems, the present application provides a beam recovery method in a multi-TRP system. The method is executed on the user equipment side, and includes:
obtaining at least one configured PUCCH resource through at least one preset dedicated SR resource when a beam failure event is detected, and the PUCCH resource is used to carry beam failure event transmission;
selecting a report-receiving TRP and a first beam, and using the first beam to send the beam failure event to the report-receiving TRP on the PUCCH resource, so that a base station reconfigures beams for transmission.

Preferably, the step of selecting the report-receiving TRP and the first beam further includes:
selecting a TRP in which the beam failure event occurs as the report-receiving TRP, and selecting a corresponding pointing beam of the report-receiving TRP as the first beam.

Preferably, the step of selecting the report-receiving TRP and the first beam further includes:
selecting a TRP without a beam failure event as the report-receiving TRP, and selecting its corresponding pointing beam as the first beam.

Preferably, the step of selecting the first beam further includes:
selecting, as the first beam, a beam used by the last PUCCH sent to the report-receiving TRP before the beam failure event is detected.

Preferably, the step of selecting the first beam further includes:
selecting, as the first beam, a beam that is set in a spatial relationship used for receiving PDCCH, wherein the spatial relationship is in a control resource set with the smallest index value in the control resource set group corresponding to the report-receiving TRP.

Preferably, the number of the PUCCH resources are two or more.

Preferably, the PUCCH resource has a mapping relationship with the report-receiving TRP, and using the first beam to send the beam failure event to the report-receiving TRP on the PUCCH resource is as follows:

The beam failure event is sent on the PUCCH resource corresponding to the report-receiving TRP, and the first beam is used to transmit the PUCCH to the report-receiving TRP.

Preferably, there is no mapping relationship between the PUCCH resource and the report-receiving TRP, and the step of using the first beam to send the beam failure event to the report-receiving TRP on the PUCCH resource is as follows:
according to resource index value, a first PUCCH resource is selected to carry the beam failure event, and the first beam is used to transmit the PUCCH to the report-receiving TRP.

Preferably, the beam failure event is a TRP transmission beam failure.

The present application also provides a beam recovery method in a multi-TRP system, where the method is executed at the base station and includes:
configuring at least one SR resource;
receiving a beam transmission failure event reported by a user equipment, and reconfiguring a transmission beam of a TRP corresponding to the beam transmission failure event.

Preferably, the number of the SR resources is the same as the number of TRPs.

Preferably, the SR resource is configured by RRC or acquired by the core network.

Preferably, before the step of receiving the beam transmission failure event reported by the user equipment and reconfiguring the transmission beam of the TRP corresponding to the beam transmission failure event, the method further includes:
detecting a scheduling request reported by the user equipment;
configuring at least one PUCCH resource for the user equipment based on the scheduling request.

Preferably, the PUCCH resource has a corresponding relationship with the TRP.

Preferably, the method is executed on the user equipment side, including:
sending a scheduling request to a first cell according to a type of a cell to which a TRP where the event occurs belongs when detecting a TRP-level beam transmission failure event;
receiving an uplink grant of a first PUSCH transmission fed back by the first cell;
transmitting a MAC CE carrying TRP-level BFRQ to the first cell on a first PUSCH resource.

Preferably, the type of the cell to which the TRP belongs includes a secondary cell, a primary cell, and a primary secondary cell.

Preferably, the first cell includes a primary cell and a primary secondary cell.

Preferably, the type of the cell to which the TRP belongs is a secondary cell, and the steps of transmitting the MAC CE carrying the TRP-level BFRQ to the first cell on a first PUSCH resource further include:
receiving a beam failure recovery response from the secondary cell.

Preferably, the cell type of the TRP is the primary cell/primary secondary cell, and after the step of transmitting the MAC CE carrying the TRP-level BFRQ to the first cell on the first PUSCH resource, the method further includes:
receiving the beam failure recovery response from the primary cell/primary secondary cells.

Preferably, the information carried by the MAC CE includes an index value of the TRP in which beam failure occurred, a carrier component CC index value, a new candidate beam indication, and a first identifier indicating whether a new candidate beam is found or not.

Preferably, the information carried by the MAC CE further includes BFRQ messages of two TRPs.

Preferably, the information carried by the MAC CE further includes a BFRQ message specifying a TRP.

Preferably, before the step of detecting a TRP-level beam transmission failure event, the method further includes:
receiving the beam failure detection reference signal BFD-RS and the new beam identification reference signal NBI-RS configured by higher layer signaling.

Preferably, before the step of receiving the uplink grant of the first PUSCH transmission sent by the first cell, the method further includes:
receiving an uplink grant for transmission of a buffer status report BSR;
reporting the BSR to the first cell through the MAC CE.

The present application also provides a beam recovery method in a multi-TRP system, where the method is executed at the base station and includes:
receiving a BFRQ message reported by a user equipment;
reconfiguring a transmission beam of at least one TRP according to the BFRQ message.

Preferably, after receiving the BFRQ message reported by the user equipment, the method further includes:
scheduling a new PUSCH through the PDCCH as a response to the reported BFRQ message.

Preferably, a HARQ process index value of the new PUSCH is the same as a HARQ process index value of the reported BFRQ PUSCH and an NDI value is inverted.

Preferably, the step of reconfiguring the transmission beam of at least one TRP according to the BFRQ message includes:
the BFRQ message being a BFRQ message of one TRP, performing beam reconfiguration on the TRP, and reusing the configuration to at least one other TRP.

The present application also provides a beam recovery method in a multi-TRP system, characterized in that the method is performed on a user equipment side, comprising:
obtaining a new candidate beam when detecting a beam transmission failure event;
selecting a PRACH resource corresponding to the new candidate beam, and transmitting the beam transmission failure event to a base station on the PRACH resource.

Preferably, the beam transmission failure event is a beam transmission failure event of two TRPs, and the step of selecting the PRACH resource corresponding to the new candidate beam, and transmitting the beam transmission failure event to the base station on the PRACH resource includes:
selecting a PRACH resource corresponding to a new candidate beam of the first TRP, and reporting the beam transmission failure event of the first TRP on the PRACH resource;
monitoring a beam recovery response of the base station;
selecting a PRACH resource corresponding to a new candidate beam of the second TRP if the beam recovery response is obtained, and reporting the beam transmission failure event of the second TRP on the PRACH resource.

The present application also provides a beam recovery method in a multi-TRP system, where the method is executed at the base station and includes:
obtaining a new candidate beam reported by a user equipment through a detected PRACH;
reconfiguring a transmission beam of at least one TRP according to the new candidate beam.

Preferably, the step of reconfiguring the transmission beam of at least one TRP according to the new candidate beam includes:
reconfiguring a transmission beam of a TRP corresponding to the new candidate beam according to the new candidate beam, and reusing beam configuration of the TRP to at least one other TRP.

The present application also provides a communication device, comprising a processor and a communication circuit, wherein the processor is connected to the communication circuit, and the processor is configured to execute instructions to implement the method as described above.

The present application also provides a communication device, comprising a processor and a communication circuit, the processor being connected to the communication circuit, and the processor being configured to execute instructions to implement the method as described above.

The present application also provides a readable storage medium storing instructions, including the instructions that tare executed to implement the method as described above.

The beneficial effect of the present application is to address the problem of TRP transmission beam failures. The beam failure events can be reported by selecting the beams and PUCCH resources corresponding to the TRPs with beam failures, or the beam failure events can be reported to the TRPs without beam failures. Then the TRP transmission beam in which beam failure occurs is recovered.

### BRIEF DESCRIPTION OF DRAWINGS

In order to illustrate the technical solutions in the embodiments of the present application more clearly, the accompanying drawings that need to be used in the description of the embodiments will be briefly introduced below. Obviously, the accompanying drawings in the following description are only some embodiments of the present application. For those of ordinary skill in the art, other drawings can also be obtained from these drawings without any creative effort. Wherein:
FIG. 1 is a schematic diagram of beam management under a single TRP in the prior art;
FIG. 2 is a schematic diagram of a multi-TRP system based on multi-DCI in the prior art;
FIG. 3 is a schematic structural diagram of an embodiment of a wireless communication system or network of the present application;
FIG. 4 is a schematic flowchart of the first embodiment of the beam recovery method in the multi-TRP system of the present application executed on a user equipment side;
FIG. 5 is a schematic flowchart of configuring a beam under an SR resource for this application and corresponding to a TRP in which failure occurs;
FIG. 6 is a schematic flowchart of configuring a beam under an SR resource for this application and corresponding to a TRP in which no failure occurs;
FIG. 7 is a schematic flowchart of a scenario where a beam corresponds to a TRP in which failure occurs when PUCCH resources are bound to a TRP in the present application;
FIG. 8 is a schematic flowchart of a scenario where a beam corresponds to a TRP in which failure occurs when the PUCCH resource of the present application is not bound to a TRP;
FIG. 9 is a schematic flowchart of a scenario where a beam corresponds to a TRP in which no failure occurs when the PUCCH resource of the present application is not bound to a TRP;
FIG. 10 is a schematic flowchart of a first embodiment of the beam recovery method in a multi-TRP system of the present application executed at a base station;
FIG. 11 is a schematic flowchart of a second embodiment of the beam recovery method under the multi-TRP system of the present application executed on the user equipment side;
FIG. 12 is a schematic flowchart of reporting BFRQ using conventional SR resources in the SCell of the application;
FIG. 13 is a schematic flowchart of reporting BFRQ based on conventional SR in PCell/PSCell of the present application.
FIG. 14 is a schematic diagram showing beam failure in both TRPs of the SCell of the present application and a cell-level beam recovery mechanism activated;
FIG. 15 is a schematic diagram show beam failure in both TRPs of the SCell of the application and beam recovery based on the measurement results of the two TRP levels;
FIG. 16 is a schematic diagram of beam failure in both TRPs of the SCell of the present application and beam recovery based on the measurement result of one TRP level;
FIG. 17 is a schematic flowchart before step ST200 in Embodiment 2 of the present application;
FIG. 18 is a schematic flowchart of Embodiment 2 of the beam recovery method under the multi-TRP system of the present application executed at the base station;
FIG. 19 is a schematic flowchart of Embodiment 3 of the beam recovery method under the multi-TRP system of the present application executed on the user equipment side;
FIG. 20 is a schematic diagram showing beam failures in both TRPs of the PCell/PSCell of the present application and Cell-level beam recovery activated;
FIG. 21 is a schematic diagram showing beam failures occurring in both TRPs of the PCell/PSCell of the present application and first restoring the first TRP and then restoring the second TRP;
FIG. 22 is a schematic flowchart of Embodiment 3 of the beam recovery method under the multi-TRP system of the present application executed at the base station;
FIG. 23 is a schematic diagram showing beam failures in both TRPs of the PCell/PSCell of the present application and beam recovery based on the measurement result of one TRP level;
FIG. 24 is a schematic structural diagram of Embodiment 1 of a communication device of the present application;
FIG. 25 is a schematic structural diagram of Embodiment 2 of a communication device of the present application;
FIG. 26 is a schematic structural diagram of an embodiment of a readable storage medium of the present application.

### DETAILED DESCRIPTION OF EMBODIMENTS

The technical solutions in the embodiments of the present application will be clearly and completely described below with reference to the accompanying drawings in the embodiments of the present application, and the following embodiments that do not conflict can be combined with each other. Obviously, the described embodiments are only a part of the embodiments of the present application, but not all of the embodiments. Based on the embodiments in this application, all other embodiments obtained by those of ordinary skill in the art without making creative work, all belong to the scope of protection of this application.

"User equipment" in this application may include or represent any portable computing device used for communication. Examples of user equipment that may be used in certain embodiments of the described devices, methods and systems may be wired or wireless devices such as mobile devices, mobile phones, terminals, smart phones, portable computing devices, such as laptop computers, handheld devices, tablets, tablet computers, netbooks, personal digital assistants, music players, and other computing devices capable of wired or wireless communications.

FIG. 3 is a schematic diagram of a wireless communication system or network 100 of multiple network nodes 104a-104m (e.g., base stations gNB) including core network 102 (or telecommunications infrastructure) with cells 106a-106m serving multiple wireless communication units 108a-108e (e.g., UEs). A plurality of network nodes 104a-104m are connected to the core network 102 by links. These links may be wired or wireless (e.g., radio communication links, fiber optics, etc.). Core network 102 may include multiple core network nodes, network entities, application servers, or any other network or computing device that may communicate with one or more radio access networks including multiple network nodes 104a-104m.

In this example, network nodes 104a-104m are illustrated as base stations, which may be gNBs in a 5G network, for example but not limited to. Each of the plurality of network nodes 104a-104m (e.g., base stations) has a footprint, as schematically represented in FIG. 3 for simplicity and by way of example and not for limitation, for serving one or more user equipments (UEs) 108a-108e by corresponding circular cells 106a-106m. UEs 108a-108e can receive services from wireless communication system 100, such as voice, video, audio, or other communication services.

The wireless communication system or network 100 may include or represent any one or more communication networks used for communication between UEs 108a-108e and other devices, content sources, or servers connected to the wireless communication system or network 100. The core network 102 may further include or represent one or more communication networks, one or more network nodes, entities, elements, application servers, servers, base stations or other network equipment that are linked, coupled or connected to form the wireless communication system or network 100. Links or couplings between network nodes may be wired or wireless (e.g., radio communication links, fiber optics, etc.). The wireless communication system or network 100 and core network 102 may include any suitable combination of a core network and a wireless access network comprising network nodes or entities, base stations, access points, etc., that enable communication between UEs 108a-108e, network nodes 104a-104m of core network 102 and wireless communication system 100, content sources, and/or other devices connected to system or network 100.

An example of a wireless communication network 100 that may be used in some embodiments of the described devices, methods and systems may be at least one communication network or a combination thereof including, but not limited to, one or more wired and/or wireless telecommunications networks, a core network(s), radio access network(s), computer network(s), data communication network(s), internet, telephone network, wireless network, such as WiMAX based on the IEEE 802.11 standard by way of example only, WLAN and/or Wi-Fi network, or Internet Protocol (IP) network, packet-switched network or enhanced packet-switched network, IP Multimedia Subsystem (IMS) network or based on wireless, cellular or satellite Technology communication networks, such as mobile networks, Global System for Mobile Communications (GSM), GPRS networks, Wideband Code Division Multiple Access (W-CDMA), CDMA2000 or LTE/Advanced LTE communication network or any 2nd, 3rd, 4th, or 5th generation and beyond communication network etc.

In the example of FIG. 3, the wireless communication system 100 may be, by way of example only and not limited to, a 5G communication network using cyclic prefix orthogonal frequency division multiplexing (CP- OFDM) technology. The downlink may include one or more communication channels for transmitting data from one or more gNBs 104a-104m to one or more UEs 108a-108e. Typically a downlink channel is a communication channel used to transmit data, e.g., from gNB 104a to UE 108a.

Both the uplink and downlink for 5G networks are divided into radio frames (e.g., each frame may be 10ms in length), where each frame may be divided into multiple subframes. For example, each frame may include 10 subframes of equal length, wherein each subframe consists of multiple time slots (e.g., 2 time slots) for transmitting data. In addition to time slots, a subframe may include several additional special fields or OFDM symbols, which may include, by way of example only, downlink synchronization symbols, broadcast symbols and/or uplink reference symbols.

For ease of description, the term "UE" is used instead of "user equipment" for description below.

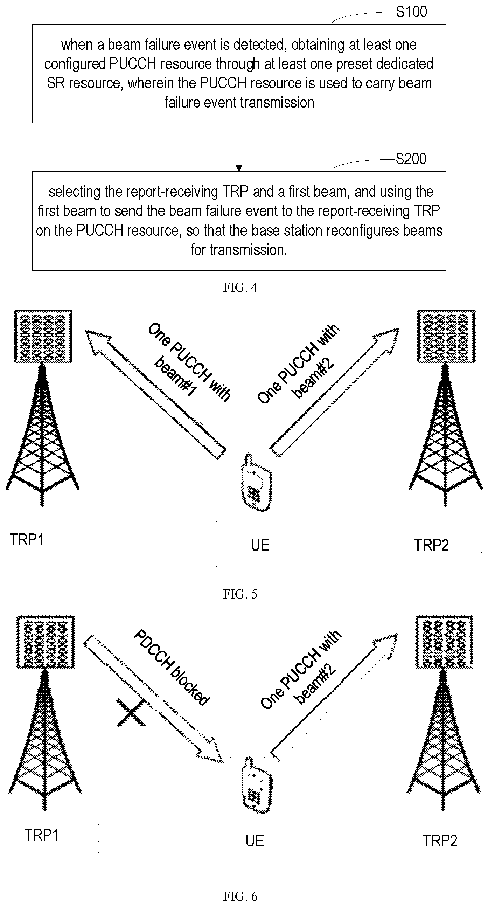

As shown in FIG. 4, the present application provides a beam recovery method in a multi-TRP system, including:
In step S100, when a beam failure event is detected, obtaining at least one configured PUCCH resource through at least one preset dedicated SR resource, wherein the PUCCH resource is used to carry beam failure event transmission;

During the communication process, the UE continuously monitors the downlink transmission beam quality corresponding to multiple TRPs, and determines that a beam failure event occurs if all downlink transmission beam qualities corresponding to one or more TRPs are lower than a preset threshold. Beam failure events include one TRP transmit beam failure event or multiple TRP transmit beam failure events. The downlink transmission beam includes the transmission beam used for the downlink control channel PDCCH or other downlink channels, etc., which will not be repeated here.

When the UE detects the beam failure event, it obtains the configured PUCCH resources according to the number of dedicated SR resources. In current protocols, there is generally only one dedicated SR resource. If two or more dedicated SR resources are configured, the number of dedicated SR resources needs to be increased through high-layer signaling, and the PUCCH resources configured by the SR resources need to be associated with specific transmission beams. The number of dedicated SR resources may be one, or may be the same as the number of TRPs, that is, multiple.

If only one dedicated SR resource is configured through high-level signaling, the configured PUCCH resource is obtained based on the SR resource, and a PUCCH resource is associated with several (represented as N, N can be 2) beams. This method entails minimal deviations from the standard, as it solely requires the association of these N beams with the PUCCH resources utilized for transmitting beam failure events. If the TRP level-based beam recovery mechanism is triggered, this dedicated SR-based PUCCH resource can be used for each TRP of all cells in the same cell group, that is, each TRP in the cell group can use this dedicated SR-based PUCCH resource to report beam failure event.

Subsequently, the UE sends the beam failure event on the PUCCH resource corresponding to the SR resource, the base station configures the uplink resource for the UE. The UE will send the beam failure recovery request (BFRQ) information to the base station through the Medium Access Control (MAC) control element (CE), including the new candidate beam information, a TRP index and CC index and other information of a TRP in which beam failure occurs.

In step S200, selecting the report-receiving TRP and a first beam, and using the first beam to send the beam failure event to the report-receiving TRP on the PUCCH resource, so that the base station reconfigures beams for transmission.

Wherein, the first beam is the beam used for the transmission of the reported beam transmission failure event. Of course, the first beam may or may not be bound with the TRP, and the PUCCH and the TRP may or may not be bound, and the corresponding relationship between the three may be combined or exist independently according to the needs of the actual scene. The present invention is not limited to this.

In some embodiments, the step of selecting the report-receiving TRP and the first beam further includes:
selecting a TRP in which the beam failure event occurs as the report-receiving TRP, and selecting a corresponding pointing beam of the report-receiving TRP as the first beam.

Specifically, in a multi-TRP system under multi-DCI, there is a non-ideal backhaul (Non-ideal Backhaul) transmission between multiple TRPs, and there is a certain delay in the information exchange between TRPs, and even if a beam of a downlink control channel of a certain TRP is blocked, and its upstream channel is not necessarily blocked. Therefore, if the high-layer signaling configures only one dedicated SR resource for configuring one PUCCH resource, and this one PUCCH resource is associated with two beams, the PUCCH resource used to transmit the beam failure event corresponds one-to-one with the TRP where the beam failure occurs based on the actual location of the TRP where the beam failure occurred. That is, if a beam failure occurs in a certain TRP, the beam directed to the TRP is used to report the beam failure event through the configured PUCCH resources. In particular, the beam pointing to the TRP in which the beam failure occurred may be the beam corresponding to the spatial setting (Spatial Relation) used to transmit the PUCCH to the TRP for the last time before the beam failure occurred, or the beam corresponding to the spatial setting in the CORESET with the smallest index value for receiving physical downlink control channel (PDCCH), the CORESET with the smallest index value is obtained from all CORESETs configured with the same CORESETPoolIndex value, and this CORESETPoolIndex value corresponds to the TRP where the beam failure occurred.

As shown in FIG. 5, if beam failure occurs at TRP1, beam #1 directed to TRP1 is used to transmit PUCCH; if beam failure occurs at TRP2, beam #2 directed to TRP2 is used to transmit PUCCH.

In some embodiments, the step of selecting the report-receiving TRP and the first beam further includes:
selecting a TRP without a beam failure event as the report-receiving TRP, and selecting its corresponding pointing beam as the first beam.

Specifically, if all the beams of the downlink control channel of a TRP in the cell group fail to be sent, and no beam failure occurs in another TRP, at the same time, because the TRP with no beam failure has better channel conditions, a beam failure event of another TRP can be reported through PUCCH to the TRP with no beam failure. Therefore, if the high-layer signaling configures only one dedicated SR resource for configuring one PUCCH resource, and this one PUCCH resource is associated with two beams, according to the actual azimuth of the TRP without beam failure, a beam failure event of another TRP can be reported through PUCCH to the TRP with no beam failure. That is, the beam failure event is reported through the configured PUCCH resource by using the beam pointing to the TRP without beam failure. In particular, the beam pointing to the TRP without beam failure may be the beam corresponding to the spatial relationship (Spatial Relation) used to transmit the PUCCH to the TRP most recently, or the beam corresponding to the spatial setting used to receive the PDCCH in the CORESET with the smallest index value. The beam corresponding to the Spatial Setting, the CORESET with the smallest index value is obtained from all CORESETs configured with the same CORESETPoolIndex value, and this CORESETPoolIndex value corresponds to the TRP for which no beam failure has occurred.

As shown in FIG. 6, if a beam failure occurs in TRP1, beam #2 directed to TRP2 is used to transmit the PUCCH, and the PUCCH carries a beam failure event message of the TRP1 .

In some embodiments, the beam used by the last PUCCH sent to the report-receiving TRP before the beam failure event is detected is selected as the first beam.

In some embodiments, the step of selecting the first beam further includes:
selecting, as the first beam, a beam that is set in a spatial relationship used for receiving PDCCH, wherein the spatial relationship is in a control resource set with the smallest index value in the control resource set group corresponding to the report-receiving TRP, and the control resource set group corresponds to the report-receiving TRP.

In some embodiments, the number of PUCCH resources is two or more.

Specifically, if the upper layer signaling has at most two or more dedicated SR resources, one configured PUCCH resource can be obtained from one SR resource, and each PUCCH resource is associated with one transmit beam. Since there is only one dedicated SR resource in the current protocol, this method needs to increase the number of dedicated SR resources in high-layer signaling, and needs to associate these PUCCH resources with specific transmit beams. The number of dedicated SR resources may be the same as the number of TRPs, namely 2, and the PUCCH resource corresponding to each dedicated SR resource is only associated with one beam pointing to one TRP. If the TRP-level-based beam recovery mechanism is triggered, a specific beam needs to be used to report the beam failure event to a specific TRP through the PUCCH.

In some embodiments, there is a mapping relationship between the PUCCH resource and the report-receiving TRP, and the step of using the first beam to send the beam failure event to the report-receiving TRP on the PUCCH resource is:

The beam failure event is sent on the PUCCH resource corresponding to the report-receiving TRP, and the first beam is used to transmit the PUCCH to the report-receiving TRP.

Specifically, if there are two SR resources, the two configured PUCCHs are obtained according to the SR resources, and the two PUCCH resources are respectively associated with the corresponding TRPs. That is, the first PUCCH resource is obtained according to the first dedicated SR resource, and the UE may use the first PUCCH resource to report a message to the first TRP. A second PUCCH resource may be obtained according to the second dedicated SR resource, and the UE may use the second PUCCH resource to report a message to the second TRP. By binding the PUCCH resources to the TRP, the UE can more specifically determine the available PUCCH resources. For the method of associating the transmission beam with the PUCCH resource, the present application proposes the following method.

### (1) One-to-one correspondence between beams and TRPs in which failure occurs:

Due to the non-ideal backhaul transmission between multiple TRPs in a multi-DCI multi-TRP system, there is a certain delay in the information exchange between TRPs. Even if the beam of a certain TRP's downlink control channel is blocked, its uplink channel is not necessarily blocked.. Therefore, if the two PUCCH resources are respectively associated with the corresponding TRPs, according to the actual azimuth of the TRP in which the beam failure occurred, the PUCCH resources used to transmit the beam failure event are in one-to-one correspondence with the TRP in which the beam failure occurred. That is: if a certain TRP has a beam failure, the beam pointing to the TRP is used to report the beam failure event through the associated PUCCH resource. Specifically, if a beam failure occurs in the first TRP, the beam pointing to the first TRP is used to report the beam failure event on the first PUCCH resource. If the beam failure occurs in the second TRP, the beam pointing to the second TRP is used to report the beam failure event on the second PUCCH resources. In particular, the beam pointing to the TRP in which the beam failure occurred may be the beam corresponding to the spatial relationship used to transmit the PUCCH to the TRP for the last time before the beam failure occurred, or the beam corresponding to the spatial setting used to receive the PDCCH in the CORESET with the smallest index value. The CORESET with the smallest index value is obtained from all CORESETs configured with the same CORESETPoolIndex value, and the CORESETPoolIndex value corresponds to the TRP in which the beam failure occurred.

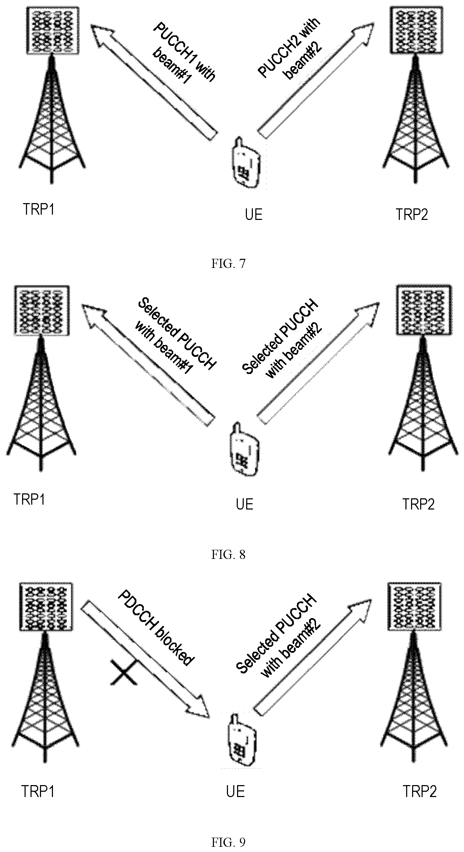

As shown in FIG. 7, if a beam failure occurs at TRP1, beam #1 directed to TRP1 is used to report the beam failure event on the PUCCH1 resource; if a beam failure occurs at TRP2, the beam #2 directed to TRP2 is used to report the beam failure event on the PUCCH2 resource.

### (2) The beam corresponds to the TRP without failure:

If all beams of the downlink control channel of a certain TRP in the cell group fail to be sent and the beam failure event of another TRP is reported to the TRP without beam failure through PUCCH, the beam pointing to the TRP without beam failure can be the beam corresponding to the spatial relationship used by TRP to transmit the PUCCH most recently, or the beam corresponding to the spatial setting used to receive PDCCH in the CORESET with the smallest index value. The CORESET with the smallest index value is obtained from all CORESET s with the same CORESETPoolIndex value, and this CORESETPoolIndex value corresponds to the TRP for which no beam failure has occurred.

In some embodiments, there is no mapping relationship between the PUCCH resource and the report-receiving TRP, and the step of using the first beam to send the beam failure event to the report-receiving TRP on the PUCCH resource is:

According to the resource index value, the first PUCCH resource is selected to carry the beam failure event, and the first beam is used to transmit the PUCCH to the report-receiving TRP.

Specifically, if the two PUCCH resources are not bound to the TRP, that is, two configured PUCCH resources are obtained according to the two dedicated SR resources, and a TRP-level beam failure event occurs, no matter which TRP has a beam failure, the UE can use any one of these two PUCCH resources. The selection method of PUCCH resources can be selecting according to the order of currently available PUCCH resources, wherein the order of PUCCH resources can be sorted according to the PUCCH resource index value. That is, the PUCCH resources are selected according to the chronological order of occurrence of TRP-level beam failure events and the order of PUCCH resources. For example, if the beam failure event occurs first in the second TRP, and there are currently two PUCCH resources available, the UE selects the first PUCCH resource to report the beam failure event. If the PUCCH resources are not bound with the TRP, the UE can obtain different PUCCH resources to adapt to different channel characteristics, and the PUCCH resources are fully utilized. For the method of associating transmission beams with PUCCH resources, the following methods are proposed in this paper.

### (1) One-to-one correspondence between beams and TRPs with failure:

Due to the non-ideal backhaul transmission between multiple TRPs in a multi-DCI multi-TRP system, there is a certain delay in the information exchange between TRPs, and even if the beam of a certain TRP's downlink control channel is blocked, its uplink channel is not necessarily blocked. Therefore, if a beam failure occurs in a TRP, PUCCH resources are selected according to the above principles, and according to the actual azimuth of the TRP in which the beam failure occurred, the beam pointing to the TRP in which the beam failure occurred is used to report the beam failure event the selected PUCCH resource. Specifically, if a beam failure occurs in the first TRP, use the beam pointing to the first TRP to report the beam failure event on the selected PUCCH resource. If the beam failure occurs in the second TRP, the beam pointing to the second TRP is used to report the beam failure event on the selected PUCCH resource. In particular, the beam pointing to the TRP in which the beam failure occurred may be the beam corresponding to the spatial relationship used to transmit the PUCCH to the TRP for the last time before the beam failure occurred, or the beam corresponding to the spatial setting used to receive the PDCCH in the CORESET with the smallest index value. The CORESET with the smallest index value is obtained from all CORESETs configured with the same CORESETPoolIndex value, and the CORESETPoolIndex value corresponds to the TRP in which the beam failure occurred.

As shown in FIG. 8, if a beam failure occurs at TRP1, beam #1 directed to TRP1 is used to report the beam failure event on the selected PUCCH resource. If a beam failure occurs at TRP2, beam #2 directed to TRP2 is used to report the beam failure event on the selected PUCCH resource.

### (2) The beam corresponds to the TRP without failure:

If all the beams of the downlink control channel of a TRP in the cell group fail to transmit, and another TRP does not have beam failure, at the same time, because the TRP without beam failure has better channel conditions, the beam failure event of another TRP can be reported to the TRP without beam failure through PUCCH. Therefore, according to the actual azimuth of the TRP without beam failure, a beam pointing to the TRP without beam failure is used to report the beam failure event through the selected PUCCH resource. Specifically, if a beam failure occurs in the first TRP, the beam pointing to the second TRP is used to report the beam failure event on the selected PUCCH resource. If the beam failure occurs in the second TRP, the beam pointing to the first TRP is used to report the beam failure event in the selected PUCCH resource. In particular, the beam pointing to the TRP without beam failure may be the beam corresponding to the spatial relationship used for the latest PUCCH transmission to the TRP, or the beam corresponding to the spatial setting used to receive the PDCCH in the CORESET with the smallest index value. The CORESET with the smallest index value is obtained from all CORESETs configured with the same CORESETPoolIndex value, and this CORESETPoolIndex value corresponds to the TRP without beam failure.

As shown in FIG. 9, if a beam failure occurs in TRP1, the beam #2 directed to TRP2 is used to report the TRP1 beam failure event message on the selected PUCCH resource.

In some embodiments, the beam failure event is a TRP transmit beam failure.

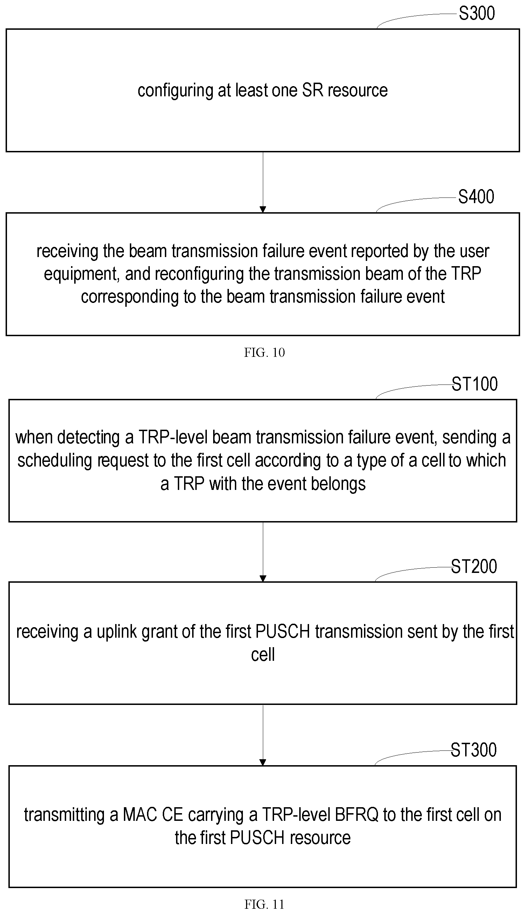

The present application also provides a beam recovery method in a multi-TRP system. As shown in FIG. 10, the method is executed at the base station and includes:
In Step S300, configuring at least one SR resource;
In Step S400, receiving the beam transmission failure event reported by the user equipment, and reconfiguring the transmission beam of the TRP corresponding to the beam transmission failure event.

In some embodiments, the number of SR resources is the same as the number of TRPs.

In some embodiments, the SR resources are configured through RRC or acquired by the core network.

In some embodiments, before the step of receiving the beam transmission failure event reported by the user equipment and reconfiguring the transmission beam of the TRP corresponding to the beam transmission failure event, the method further includes:
detecting the scheduling request reported by the user equipment;
configuring at least one PUCCH resource for the user equipment based on the scheduling request.

In some embodiments, the PUCCH resource has a corresponding relationship with TRP.

The present application provides a beam recovery method in a multi-TRP system. As shown in FIG. 11, the method is executed on the user equipment side, including:
In step ST100, when detecting a TRP-level beam transmission failure event, sending a scheduling request to the first cell according to a type of a cell to which a TRP with the event belongs;

During the communication process, the UE continuously monitors the downlink transmission beam quality corresponding to multiple TRPs, and determines that a beam failure event occurs if all downlink transmission beam qualities corresponding to one or more TRPs are lower than a preset threshold. The beam failure event includes one TRP transmission beam failure event or multiple TRP transmission beam failure events. The downlink transmission beam includes the transmission beam used for the downlink control channel PDCCH or other downlink channels, etc., which will not be repeated here.

The type of the cell to which the TRP belongs includes a secondary cell SCell, a primary cell PCell, or a primary secondary cell PSCell.

When the UE detects that a certain TRP or multiple TRPs generate a transmission beam failure event, the UE selects the first cell and sends a scheduling request to the first cell according to the preset correspondence between the cell type and the first cell. The first cell includes a primary cell and a secondary cell.

In Step ST200, receiving an uplink grant of the first PUSCH transmission sent by the first cell;
If no dedicated SR resource is configured, the corresponding PUCCH resource cannot be obtained. In addition, if the PUCCH resources acquired through the dedicated SR resources are already occupied, when a new beam failure event needs to be reported, there will also be no available PUCCH resources. In this embodiment, a conventional SR process is used to obtain an uplink grant and report BFRQ on a physical uplink shared channel (PUSCH), or report BFRQ through a physical random access channel (PRACH).

If there is no PUCCH resource corresponding to the dedicated SR resource, the conventional SR resource can be used to obtain an uplink grant (UL Grant) for PUSCH transmission, and the MAC CE carrying the beam failure recovery related information is transmitted on the PUSCH, where the conventional SR resource can be obtained through high-level configuration parameters, namely: a parameter schedulingRequestResourceId under the high-level parameter SchedulingRequestResourceConfig.

In Step ST300, transmitting a MAC CE carrying a TRP-level BFRQ to the first cell on the first PUSCH resource.

The beneficial effect of the present application is that it solves the problem that TRP performs beam recovery in the absence of dedicated SR resources. By reporting the MAC CE carrying the TRP-level BFRQ to the cell to be reported, the cell can know the TRP in which a beam failure has occurred and in turn reconfigures the transmit beam.

In some embodiments, the first cell includes a primary cell and a primary secondary cell.

In some embodiments, the cell type of the TRP is a secondary cell, and the step of transmitting the MAC CE carrying TRP-level BFRQ to the first cell on the first PUSCH resource further includes:
receiving a beam failure recovery response from the secondary cell.

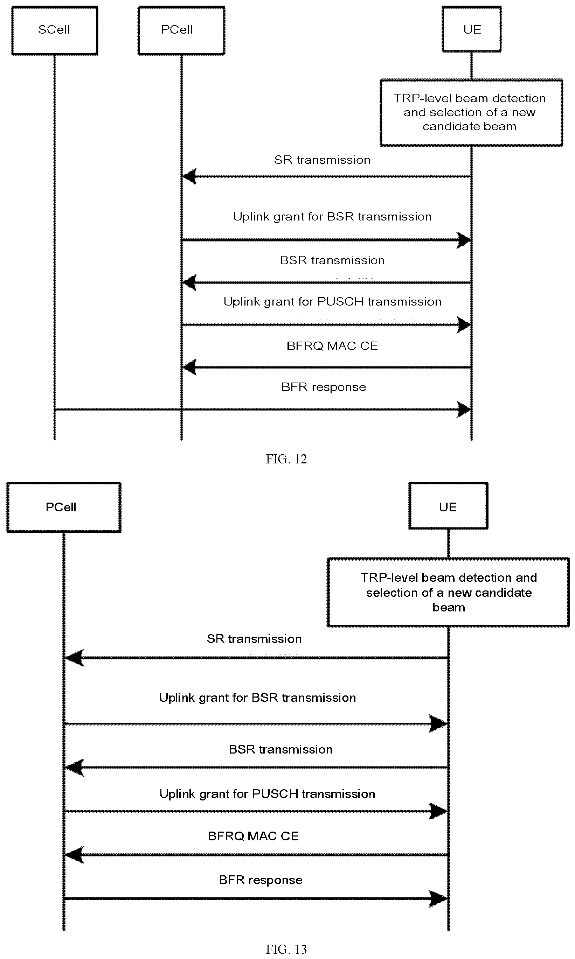

If the TRP in which the beam failure occurs belongs to the SCell and there is no PUCCH resource corresponding to the dedicated SR resource, the BFRQ reporting message based on the conventional SR resource is mainly exchanged between the UE and the PCell, and the beam failure recovery response is sent from the SCell to the UE. First, the UE performs TRP-level beam failure detection, finds that the TRP has a beam failure, and selects a new candidate beam. Second, the UE sends an SR to the PCell using conventional SR resources, notifying the PCell that there is uplink data to be transmitted. The PCell issues an uplink grant to transmit a buffer status report (BSR). The UE sends a BSR to the PCell based on the TRP-level MAC CE carrying the BFRQ, thus, to notify the PCell of the amount of data to be transmitted in the uplink. In particular, the amount of data is determined by the MAC CE. The MAC CE mainly carries the TRP index value with beam failure, CC index value, and new candidate beam indication (if one that meets the requirements is found) and an indicator showing whether a new candidate beam is located. If there are 2 TRPs with beam failure events, the MAC CE carries the BFRQ messages of the 2 TRPs. Thirdly, the PCell sends an uplink grant to the UE according to the size of the BSR, which is used to transmit the MAC CE on the PUSCH. The UE transmits the corresponding MAC CE based on the uplink grant. Finally, the SCell sends a beam failure recovery response to the UE. FIG. 12 shows a process of reporting BFRQ based on conventional SR in SCell.

In some embodiments, the cell type of the TRP is a primary cell/primary secondary cell, and after the step of transmitting the MAC CE carrying the TRP-level BFRQ to the first cell on the first PUSCH resource, further include:
receiving the beam failure recovery response sent from the primary cell/primary secondary cell.

If the TRP in which the beam failure occurs belongs to the PCell/PSCell and there is no PUCCH resource corresponding to the dedicated SR resource, the message for BFRQ reporting based on the regular SR resource is exchanged between the UE and the PCell/PSCell, and a beam failure recovery response is sent from the PCell/PScell to UE. First, the UE performs TRP-level beam failure detection, finds that the TRP has a beam failure, and selects a new candidate beam. Secondly, the UE sends an SR to the PCell/PSCell using conventional SR resources, notifying the PCell/PSCell that there is uplink data to be transmitted. The PCell/PSCell issues an uplink grant for transmission of BSR. The UE sends a BSR to the PCell/PSCell using the TRP-level MAC CE that carries BFRQ, thus, to notify the PCell/PSCell of the amount of data to be transmitted in the uplink. In particular, the amount of data is determined by the MAC CE, which mainly carries the TRP index value with beam failure, CC index value, and new candidate beam indication (if the one that meets the requirements is located) and an indicator showing whether a new candidate beam is located. If there are 2 TRPs with beam failure events, the MAC CE carries the BFRQ messages of the 2 TRPs. Thirdly, the PCell/PSCell sends an uplink grant to the UE according to the size of the BSR, which is used for transmission of the MAC CE on the PUSCH. The UE transmits the corresponding MAC CE based on the uplink grant. Finally, the PCell/PSCell sends a beam failure recovery response to the UE. FIG. 13 shows a process of reporting BFRQ based on conventional SR in PCell/PSCell.

In some embodiments, the information carried by the MAC CE includes the index value of the TRP in which the beam failure occurred, the index value of the carrier component CC, the new candidate beam indication (if found to meet the requirements) and a first indicator used to indicate whether a new candidate beam is found.

In some embodiments, the information carried by the MAC CE further includes BFRQ messages of two TRPs.

If a beam failure event occurs in both TRPs in the SCell and the Cell-level beam recovery mechanism is used, all TRPs in the cell use the same new beam, and the spatial characteristics cannot be fully utilized to configure different beams for the downlink control channels of different TRPs. If it is detected that both TRPs in the SCell have beam failures and the corresponding new candidate beams are found, a MAC CE can be designed to report the BFRQ information of the two TRPs to the base station at one time on the PUSCH.

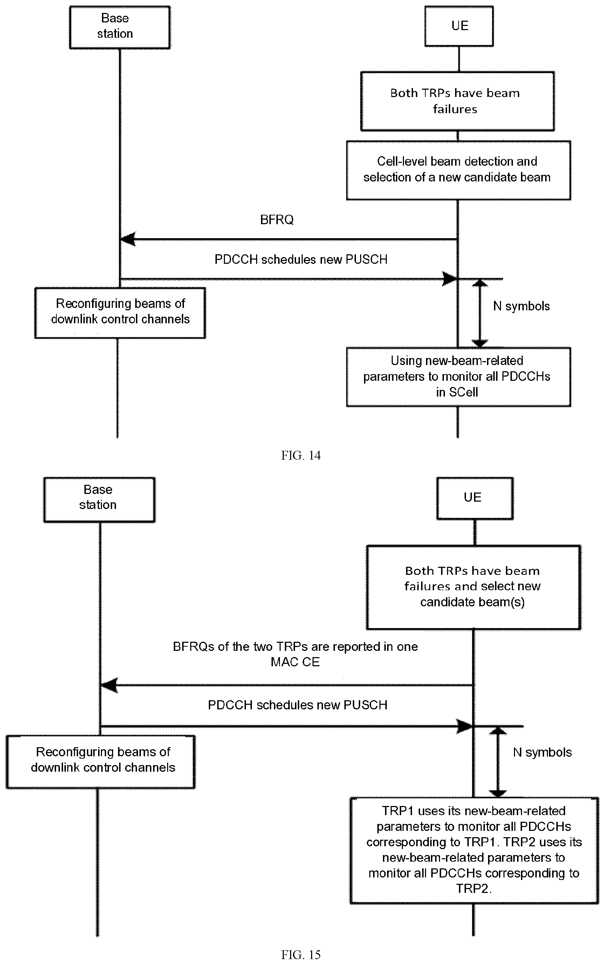

Specifically, first, if the UE detects that beam failures have occurred in both TRPs in the SCell, and selects new candidate beams for the two TRPs respectively. Secondly, dedicated SR resources are utilized to obtain uplink grant through the SR process, and the uplink grant is used to transmit the MAC CE carrying BFRQs for two TRPs at one time on the PUSCH. In particular, if cell-level dedicated SR resources are configured, the cell-level dedicated SR resources can be used, or the dedicated SR resource of a specified TRP (for example, the first TRP or the second TRP) can also be used. Thirdly, the MAC CE is generated according to the BFRQ information of the two TRPs and reported to the base station at one time on the PUSCH. In particular, regarding the design of MAC CE, for the first TRP, its relevant BFRQ information is the first TRP index value, CC index value, new candidate beam indication (if found to meet the requirements) and an indicator showing whether a new candidate beam is located. Since there are two TRPs with beam failures, the MAC CE also carries the BFRQ information of the second TRP, namely the second TRP index value, CC index value, new candidate beam indication (if it is found to meet the requirements) and an indicator showing whether a new candidate beam is located. In addition, a parameter can be added to indicate the number of TRPs for which beam failures occur. Finally, in response to the BFRQ report, the base station only sends one PDCCH for scheduling a new PUSCH transmission. At the same time, the base station reconfigures the beams of the downlink control channels of the two TRPs respectively. After N (N can be 28) symbols, the UE uses the parameters with the same antenna port quasi-co-location characteristics as the first new beam reported in the BFRQ to monitor the PDCCH in all CORESETs where the high-level parameter CORESETPoolIndex in the SCell is 0, and uses the parameters with the same antenna port quasi-co-location characteristics as the second new beam reported in the BFRQ to monitor the PDCCH in all CORESETs where the high-level parameter CORESETPoolIndex in the SCell is 1. In particular, the HARQ process index value of this new PUSCH is the same as the HARQ process index value of the PUSCH that reports BFRQ, and the NDI value is inverted. These N symbols are counted from the last symbols of the PDCCH that is sent from the base station to respond the BFRQ report. As shown in FIG. 15, both TRPs of the SCell have beam failures and a beam recovery mechanism is performed based on the two TRP-level measurement results.

In some embodiments, the information carried by the MAC CE further includes a BFRQ message specifying a TRP.

Specifically, if it is detected that both TRPs in the SCell have beam failure and the corresponding new candidate beams are found, a single-TRP beam recovery mechanism can be used to design a MAC CE to report to the PCell that the SCell has 2 TRP in which beam failure event occurs, and a TRP is selected, and only the BFRQ information of this TRP is reported. After the beam is recovered, both TRPs use the new beam information selected by this TRP to receive the control channel information. This approach saves time and reduces signaling overhead, but it lacks beam accuracy.

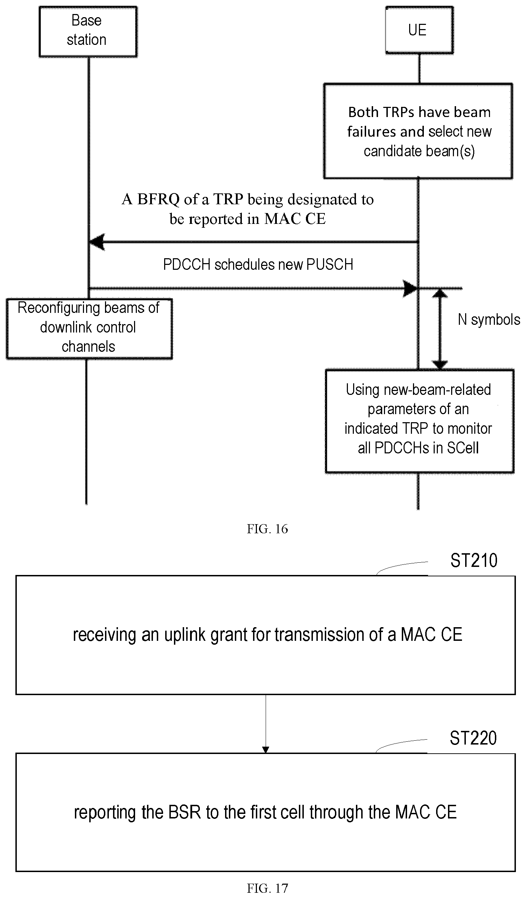

Specifically, first, if the UE detects that beam failures have occurred in both TRPs in the SCell, and selects new candidate beams for the two TRPs respectively. Secondly, use a dedicated SR resource corresponding to a TRP to obtain an uplink grant through the SR process for transmitting the MAC CE carrying BFRQ on the PUSCH, where the selected TRP can be designated by the base station or selected by the UE (for example, select the new beam with high L1-Reference Signal Received Power (L1-RSRP) to report). Thirdly, the MAC CE is generated according to the BFRQ information of this TRP and reported to the PCell on the PUSCH. In particular, regarding the design of MAC CE, for a TRP, its relevant BFRQ information is the TRP index value with beam failure, CC index value, new candidate beam indication (if found to meet the requirements) and an indicator showing whether a new candidate beam is located. The BFRQ information of a certain TRP carried in the MAC CE is the same as the TRP mentioned in the second step above. Since there are two TRPs with beam failures, a parameter is added to the MAC CE to indicate the number of TRPs with beam failures. Finally, in response to the BFRQ report, the base station sends a PDCCH to schedule a new PUSCH transmission. At the same time, the base station reconfigures the beams of the downlink control channels corresponding to the two TRPs. After N (N can be 28) symbols, the UE monitors the PDCCH in all CORESETs in the SCell using the parameters that have the same antenna port quasi-co-location characteristics as the new beam reported in the BFRQ. In particular, the HARQ process index value of this new PUSCH is the same as the HARQ process index value of the PUSCH reporting BFRQ, and the NDI value is inverted. These N symbols are counted from the last symbols of the PDCCH that is sent from the base station to respond to the BFRQ report. As shown in FIG. 16, both TRPs of the SCell have beam failures, and a beam recovery mechanism is performed based on one TRP-level measurement results.

In some embodiments, before the step when detecting a TRP-level beam transmission failure event, the method further includes:
receiving the beam failure detection reference signal BFD-RS and the new beam identification reference signal NBI-RS configured by higher layer signaling.

Specifically, if a beam failure event occurs in both TRPs in the SCell, the beam recovery mechanism in the single TRP system can be used, but the cell-level beam failure detection reference signal (BFD-RS) and new beam identification reference signal (NBI-RS) needs to be configured in the high-level signaling. These two reference signals can be synchronization signals and Physical Broadcast Channel (PBCH) blocks (SSB: Synchronization Signal and PBCH Block) or periodic channel state information reference Signal (CSI-RS). Since it is a cell-level reference signal, each reference signal covers a larger angle, so the cell-level reference signal is different from the TRP-level reference signal. In addition, it is also necessary to use the cell-level beam failure event counter (i.e., BFI_COUNTER), and configure other cell-level high-level parameters, such as cell-level beam failure detection timer (e.g., high-level parameter beamFailureDetectionTimer), and a cell level dedicated SR resource index used to transmit beams failure request information (e.g., high-level parameter schedulingRequestID-BFR-SCell-r16). If it is necessary to save resources, the beam failure event counter, beam failure detection timer, and dedicated SR resource index can reuse the corresponding parameters of a certain TRP in the TRP level parameters, for example, use the beam failure event counter, beam failure detection timer and dedicated SR resource index of the TRP (i.e., the first TRP) corresponding to the high-level parameter CORESETPoolIndex value of 0 can also use the corresponding parameters of the second TRP.

In some embodiments, as shown in FIG. 17, before the step of receiving the uplink grant of the first PUSCH transmission fed back by the first cell in step S200, the method further includes:

In Step ST210, receiving an uplink grant for transmission of the MAC CE;

In Step ST220, reporting the BSR to the first cell through the MAC CE.

Specifically, if both TRPs in the SCell detect a beam failure event, the UE switches to the cell-level beam recovery mechanism, reuses the above-defined variables and high-level parameters for beam failure detection and selection of new candidate beams, and reports a beam failure recovery request to the base station in the form of MAC CE. If a new candidate beam is found, the MAC CE only carries a new candidate beam and CC index value. If no new candidate beam is found, it carries an indication that there is no candidate beam and CC index value that meet the standard. For the reported BFRQ, the base station schedules a new PUSCH by sending the PDCCH as a response to the BFRQ report, wherein the HARQ process index value of the new PUSCH is the same as the HARQ process index value of the PUSCH used for reporting BFRQ, and the NDI value is inverted. At the same time, the base station reconfigures the beam of the downlink control channel. After N (N can be 28) symbols, the UE monitors the PDCCH in all CORESETs in the SCell using the parameters that have the same antenna port quasi-co-location characteristics as the new beam reported in the BFRQ, where the N symbols are numbered from the last symbol of the PDCCH that is sent by the base station to respond to the BFRQ reporting. As shown in FIG. 14, both TRPs of the SCell have beam failures and use the cell-level beam recovery mechanism.

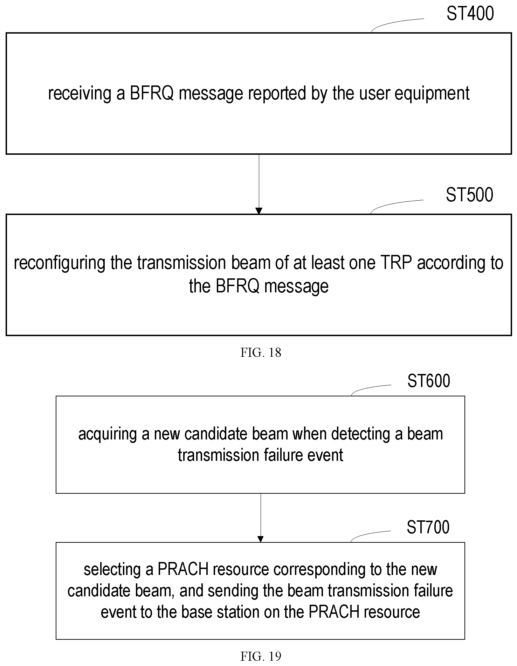

The present application also provides a beam recovery method in a multi-TRP system. As shown in FIG. 18, the method is executed at the base station, including:
In Step ST400, receiving a BFRQ message reported by the user equipment;
In Step ST500, reconfiguring the transmission beam of at least one TRP according to the BFRQ message.

In some embodiments, after receiving the BFRQ message reported by the user equipment, the method further includes:
scheduling a new PUSCH through the PDCCH as a response to the reported BFRQ message.

In some embodiments, the HARQ process index value of the new PUSCH is the same as the HARQ process index value of a PUSCH of the reported BFRQ, and the NDI value is inverted.

In some embodiments, the step of reconfiguring the transmission beam of at least one TRP according to the BFRQ message includes:
The BFRQ message is a BFRQ message of one TRP, and beam reconfiguration is performed on the TRP, and the configuration is reused to at least one other TRP.

The present application also provides a beam recovery method in a multi-TRP system. As shown in FIG. 19, the method is performed on the user equipment side, including:
In Step ST600, acquiring a new candidate beam when detecting a beam transmission failure event;
In Step ST700, selecting a PRACH resource corresponding to the new candidate beam, and sending the beam transmission failure event to the base station on the PRACH resource.

Specifically, if there is no PUCCH resource corresponding to the dedicated SR resource, the PRACH channel can be used to report the BFRQ information, wherein the PRACH resource for transmitting beam failure information can be obtained through a high-level parameter (i.e., a high-level parameter PRACH-ResourceDedicatedBFR).

After the new candidate beam is located, because the candidate beam has a corresponding relationship with the PRACH resource used for transmitting beam failure information, the PRACH resource used for transmitting beam failure information is selected according to the new candidate beam, and the beam failure event is reported on the PRACH channel. The base station obtains the new candidate beam information reported by the UE through the detected PRACH channel. Within a time window starting from a certain time slot after sending PRACH, the UE uses the same antenna port quasi-co-location parameter as the new candidate beam to monitor PDCCH in the search space set indicated by the beam recovery search space index value configured by the high-level signaling (for example, high-level parameter recoverySearchSpaceId), until the UE receives the MAC CE for activating the transmission configuration indicator (TCI) state or receives the high-level parameters for activating and releasing the TCI state (i.e., tci-StatesPDCCHToAddList and tci-StatesPDCCH-ToReleaseList). In particular, if the PRACH is sent in time slot n, the time slot where the starting point of this time window is located is (n+N), and N can be 4. This time window is configured according to the parameter beamFailureRecoveryTimer under the high-level parameter BeamFailureRecoveryConfig. If the PDCCH is detected, the reported beam failure event and the new candidate beam are considered to be received by the base station, and at the same time, the base station reconfigures the beam of the downlink control channel.

If both TRPs in the PCell/PSCell have beam failure events, the beam recovery mechanism of a single TRP system can be used, but the cell-level beam failure detection reference signal and the new beam identification reference signal need to be configured in the high-layer signaling. The reference signal can be SSB (SS/PBCH Block) or periodic CSI-RS. Since it is a cell-level reference signal, each reference signal covers a larger angle, so the cell-level reference signal is different from the TRP-level reference signal. In addition, it is also necessary to use the cell-level beam failure event counter (i.e., BFI_COUNTER), and configure other cell-level high-level parameters, such as cell-level beam failure detection timer (i.e., high-level parameter beamFailureDetectionTimer), the cell level PRACH resource used to transmit beam failure information (for example, high layer parameter PRACH-ResourceDedicatedBFR). If it is necessary to save resources, the beam failure event counter and beam failure detection timer can reuse the corresponding parameters of a certain TRP in the TRP level parameters. For example, the beam failure event counter and beam failure detection timer of the TRP corresponding to the high-level parameter CORESETPoolIndex value of 0 (i.e., the first TRP ) is used, and the corresponding parameters of the second TRP can also be used.

If both TRPs in the PCell/PSCell detect a beam failure event, the UE switches to the cell-level beam recovery mechanism, and reuses the above-defined variables and high-level parameters for beam failure detection and selection of new candidate beams. After locating the new candidate beam, since the candidate beam has a corresponding relationship with the PRACH resource used for transmitting beam failure information, the new candidate beam selected according to the Cell-level reference signal, and a PRACH resource is selected for transmitting beam failure information. The beam failure events are reported on a PRACH channel. The base station obtains the new candidate beam information reported by the UE through the detected PRACH channel.

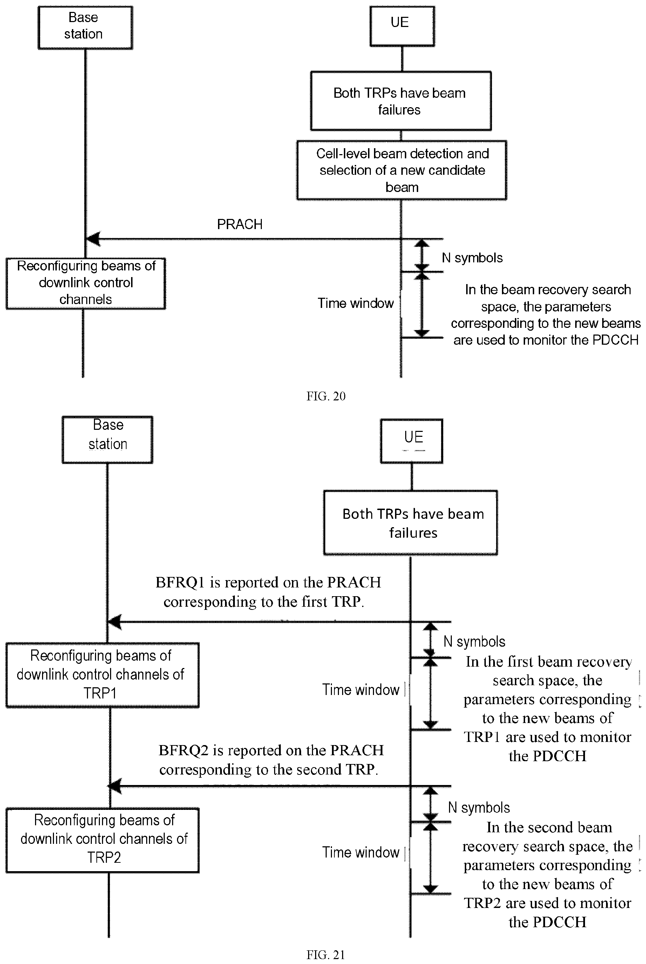

Within a time window starting from a certain time slot after sending PRACH, the UE uses the parameters that have the same antenna port quasi-co-location characteristics as the new candidate beam to monitor the PDCCH in the search space set indicated by beam recovery search space index value configured by the high layer signaling (e.g., high layer The parameter recoverySearchSpaceId), until the UE receives the MAC CE for activating the TCI state or the higher-layer parameters for activating and releasing the TCI state (i.e., tci-StatesPDCCHToAddList and tci-StatesPDCCH -ToReleaseList). In particular, if the PRACH is sent in time slot n, the time slot where the starting point of this time window is located is (n+N), and N can be 4. This time window is configured according to the parameter beamFailureRecoveryTimer under the high-level parameter BeamFailureRecoveryConfig. If the PDCCH is detected, the reported beam failure event and the new candidate beam are considered to be received by the base station. At the same time, the base station reconfigures the beam of the downlink control channel. As shown in FIG. 20, both TRPs of PCell/PSCell have beam failures and use the cell-level beam recovery mechanism.

In some embodiments, the beam transmission failure event is a beam transmission failure event of two TRPs. In step ST700, the step of selecting PRACH resource corresponding to the new candidate beam, and the sending the beam transmission failure event on the PRACH resource to base station includes:
In Step ST710, selecting the PRACH resource corresponding to the new candidate beam of the first TRP, and reporting the beam transmission failure event of the first TRP on the PRACH resource;
In Step ST720, monitoring the beam recovery response of the base station;
In step ST730, if the beam recovery response is obtained, selecting the PRACH resource corresponding to the new candidate beam of the second TRP, and reporting the beam transmission failure event of the second TRP on the PRACH resource.

Specifically, if both TRPs in the PCell/PSCell have a beam failure event and use the cell-level beam recovery mechanism, all TRPs in the cell use the same new beam, and the downlink control channels of different TRPs with spatial characteristics cannot be fully utilized to configure different beams. If it is detected that both TRPs in the PCell/PSCell have beam failures and the corresponding new candidate beams are found, the BFRQ of the first TRP can be sent through the PRACH channel to recover the first TRP, and then BFRQ of the second TRP can be sent through the PRACH channel to recovers the second TRP. Similarly, the second TRP can be recovered before recovering the first TRP. In this method, there is no need to use a cell-level beam recovery mechanism. Additionally, different beams can be configured for different TRPs.

Since the candidate beam has a corresponding relationship with the PRACH resource used for transmitting beam failure information, the PRACH resource used for transmitting the beam failure information of the first TRP is selected according to the new candidate beam of the first TRP, and the beam failure event of the first TRP is reported on the PRACH channel. The base station obtains the new candidate beam information of the first TRP reported by the UE through the detected PRACH channel. Within a time window starting from a certain time slot after sending PRACH, the UE uses the parameters that have the same antenna port quasi-co-location characteristics as the new candidate beam to monitor the PDCCH in the search space set indicated by the first beam recovery search space index value (e.g., the high-level parameter recoverySearchSpaceId1), until the UE receives the MAC CE for activating the TCI state or receives the high-level parameters for activating and releasing the TCI state (i.e., tci-StatesPDCCHToAddList and tci-StatesPDCCH-ToReleaseList). In particular, if the PRACH is sent in time slot n, the time slot where the starting point of this time window is located is (n+N), and N can be 4. This time window is configured according to the parameter beamFailureRecoveryTimer under the high-level parameter BeamFailureRecoveryConfig. If the PDCCH is detected, it is considered that the reported beam failure event of the first TRP and the new candidate beam are received by the base station. At the same time, the base station reconfigures the beam of the downlink control channel of the first TRP.

After the beam recovery of the first TRP, the PRACH resource for transmitting the beam failure information of the second TRP is selected according to the new candidate beam of the second TRP, and the beam failure event of the second TRP is reported on the PRACH channel. The base station detects PRACH channel to receive new candidate beam information of the second TRP reported by the UE. Within a time window starting from a certain time slot after sending PRACH, the UE uses the parameters that have the same antenna port quasi-co-location characteristics as the new candidate beam to monitor the PDCCH in the search space set indicated by the second beam recovery search space index value (e.g., the high-level parameter recoverySearchSpaceId2), until the UE receives the MAC CE for activating the TCI state or receives the high-level parameters for activating and releasing the TCI state (i.e., tci-StatesPDCCHToAddList and tci-StatesPDCCH-ToReleaseList). If the PDCCH is detected, the reported beam failure event of the second TRP and the new candidate beam are considered to be received by the base station. At the same time, the base station reconfigures the beam of the downlink control channel of the second TRP. As shown in FIG. 21, beam failure occurs on both TRPs of PCell/PSCell and the first TRP is recovered first and then the second TRP is recovered.

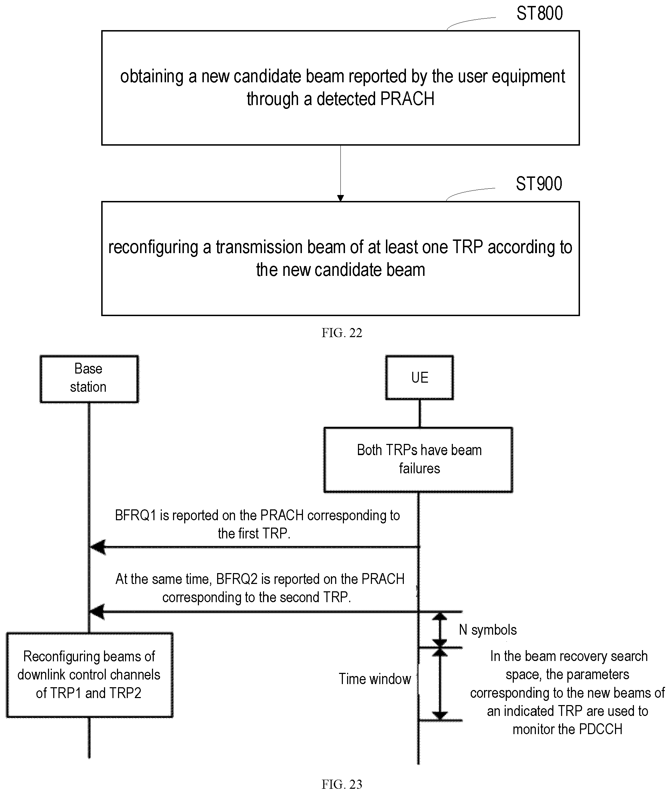

The present application also provides a beam recovery method in a multi-TRP system. As shown in FIG. 22, the method is executed at the base station, including:
In Step ST800, obtaining a new candidate beam reported by the user equipment through a detected PRACH;
In Step ST900, reconfiguring a transmission beam of at least one TRP according to the new candidate beam.

In some embodiments, the step of reconfiguring the transmission beam of at least one TRP according to the new candidate beam comprises:
reconfiguring a TRP transmission beam corresponding to the new candidate beam according to the new candidate beam, and reusing a beam configuration of the TRP to at least one other TRP.

Specifically, if it is detected that both TRPs in the PCell/PSCell have beam failures and a corresponding new candidate beam is found, the UE uses PRACH to simultaneously send the BFRQs of the two TRPs to the base station. The base station simultaneously recovers two TRPs according to the beam of one of the TRPs. In this way, time can be further saved, but another TRP may not necessarily obtain the best beam.

Since the candidate beam has a corresponding relationship with the PRACH resource used for transmitting beam failure information, the PRACH resource used for transmitting the beam failure information of the first TRP is selected according to the new candidate beam of the first TRP, and the beam failure event of the first TRP is reported on the PRACH channel. The base station obtains the new candidate beam information of the first TRP reported by the UE through the detected PRACH channel. At the same time, according to the new candidate beam of the second TRP, the PRACH resource for transmitting the beam failure information of the second TRP is selected, the beam failure event of the second TRP is reported on the PRACH channel. The base station detects the PRACH channel. If the base station can detect the PRACH channel and obtain the new candidate beam information of the second TRP reported by the UE at the same time or within a period of time (the time length is configured by the base station), the base station determines that both TRPs have a beam failure event, and uses a new candidate beam of one of the TRPs (pre-designated by the base station, which can be the first TRP or the second TRP) to recover the two TRPs. Within a time window starting from a certain time slot after sending PRACH, the UE uses the parameters that have the same antenna port quasi-co-location characteristics as the new candidate beam of the corresponding TRP to monitor the PDCCH in the search space set indicated by the beam recovery search space index value (e.g., the high-level parameter recoverySearchSpaceId), until the UE receives the MAC CE for activating the TCI state or receives the high-level parameters for activating and releasing the TCI state (i.e., tci-StatesPDCCHToAddList and tci-StatesPDCCH-ToReleaseList). In particular, if the PRACH is sent in time slot n, the time slot where the starting point of this time window is located is (n+N), and N can be 4. This time window is configured according to the parameter beamFailureRecoveryTimer under the high-level parameter BeamFailureRecoveryConfig. If the PDCCH is detected, the reported beam failure events of the two TRPs and the corresponding new candidate beams are considered to be received by the base station. At the same time, the base station reconfigures the beams of the downlink control channels of the two TRPs. As shown in FIG. 23, beam failure occurs on both TRPs of PCell/PSCell, and a beam recovery mechanism is performed based on one TRP-level measurement result.

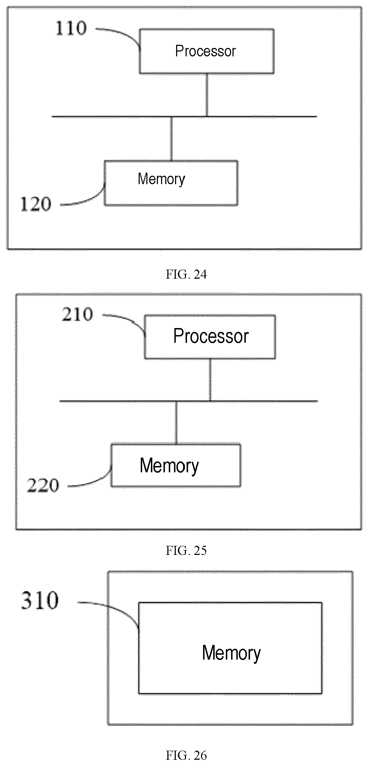

As shown in FIG. 24, the present application also provides a communication device comprising a processor 110 and a memory 120.

The processor 110 controls the operation of the communication device, and the processor 110 may also be referred to as a central processing unit (CPU). The processor 110 may be an integrated circuit chip with processing capability for processing signal sequence. The processor 110 may also be a general purpose processor, digital signal sequence processor (DSP), application specific integrated circuit (ASIC), field programmable gate array (FPGA), or other programmable logic device, discrete gate or transistor logic device, or discrete hardware components. A general purpose processor may be a microprocessor or the processor may be any conventional processor or the like.

The memory 120 stores instructions and data required for the operation of the processor 110.

The processor 110 is configured to execute instructions to implement the steps executed by the base station according to the embodiments of the present application.

As shown in FIG. 25, the second embodiment of the communication device of the present application includes a processor 210 and a memory 220.

The processor 210 controls the operation of the communication device. The processor 210 may also be referred to as a central processing unit (CPU). The processor 210 may be an integrated circuit chip, which has the processing capability of signal sequence. Processor 210 may also be a general purpose processor, digital signal sequence processor (DSP), application specific integrated circuit (ASIC), field programmable gate array (FPGA) or other programmable logic device, discrete gate or transistor logic, discrete hardware components. A general purpose processor may be a microprocessor, or the processor may be any conventional processor or the like.

Memory 220 stores instructions and data required for processor 210 to operate.

The processor 210 is configured to execute instructions to implement the methods executed by the user equipment side in the embodiments of the present application.

As shown in FIG. 26, an embodiment of the readable storage medium of the present application includes a memory 310. The memory 310 stores an instruction, and when the instruction is executed, implements the method provided by any embodiment of the present application and a possible combination thereof.

The memory 310 may include a read-only memory (ROM), a random access memory (RAM), a flash memory (Flash Memory), a hard disk, an optical disk, and the like.

In the several embodiments provided in this application, it should be understood that the disclosed method and apparatus may be implemented in other manners. For example, the device implementations described above are only illustrative. For example, the division of the modules or units is only a logical function division. In actual implementation, there may be other divisions. For example, multiple units or components may be combined or integrated into another system, or some features can be omitted, or not implemented. Additionally, the mutual coupling or direct coupling or communication connection shown or discussed may be through some interfaces, indirect coupling or communication connection of devices or units, which may be in electrical, mechanical or other forms.

The units described as separate components may or may not be physically separated. Components displayed as units may or may not be physical units, that is, may be located in one place, or may be distributed to multiple network units. Some or all of the units may be selected according to actual needs to achieve the purpose of the solution in the embodiments.

In addition, each functional unit in each embodiment of the present application may be integrated in one processing unit, or each unit may be physically included individually, or two or more units may be integrated in one unit. The above-mentioned integrated units can be implemented in the form of hardware or in the form of software functional units.

If the integrated unit is implemented in the form of a software functional unit and sold or used as an independent product, it can be stored in a computer-readable storage medium. Based on this understanding, the technical solutions of the present application in essence, or the parts that make contributions to the prior art, or all or part of the technical solutions can be embodied in the form of software products. The computer software products are stored in a storage medium, including several instructions for causing a computer device (which may be a personal computer, a server, or a network device, etc.) or a processor (processor) to execute all or part of the steps of the methods described in the various embodiments of the present application. The aforementioned storage medium includes universal serial bus (USB) disk, portable hard disk, read-only memory (ROM), random access memory (RAM), magnetic disk or optical disk and other media that can store program codes.

The above description is only an embodiment of the present application, and does not limit the scope of the patent of the present application. Any equivalent structure or equivalent process transformation made by using the contents of the description and drawings of the present application, or directly or indirectly applied to other related technologies fields are similarly included in the scope of claims of this application.

## Claims

1. A beam recovery method in a multi-TRP system, **characterized in that** the method is performed on a user equipment side, comprising:
obtaining at least one configured PUCCH resource through at least one preset dedicated SR resource when a beam failure event is detected, and the PUCCH resource is used to carry beam failure event transmission;
selecting a report-receiving TRP and a first beam, and using the first beam to send the beam failure event to the report-receiving TRP on the PUCCH resource, so that a base station reconfigures beams for transmission.

2. The beam recovery method according to claim 1, wherein the step of selecting the report-receiving TRP and the first beam further comprises:
selecting a TRP in which the beam failure event occurs as the report-receiving TRP, and selecting a corresponding pointing beam of the report-receiving TRP as the first beam.

3. The beam recovery method according to claim 1, wherein the step of selecting the report-receiving TRP and the first beam further comprises:
selecting a TRP without a beam failure event as the report-receiving TRP, and selecting its corresponding pointing beam as the first beam.

4. The beam recovery method according to claim 1, wherein the step of selecting the first beam further comprises:
selecting, as the first beam, a beam used by the last PUCCH sent to the report-receiving TRP before the beam failure event is detected.

5. The beam recovery method according to claim 1, wherein the step of selecting the first beam further comprises:
selecting, as the first beam, a beam that is set in a spatial relationship used for receiving PDCCH, wherein the spatial relationship is in a control resource set with the smallest index value in the control resource set group corresponding to the report-receiving TRP, and the control resource set group corresponds to the report-receiving TRP.

6. The beam recovery method according to claim 1, wherein the number of the PUCCH resources are two or more.

7. The beam recovery method according to claim 6, wherein the PUCCH resource has a mapping relationship with the report-receiving TRP, and using the first beam to send the beam failure event to the report-receiving TRP on the PUCCH resource is as follows:
the beam failure event is sent on the PUCCH resource corresponding to the report-receiving TRP, and the first beam is used to transmit the PUCCH to the report-receiving TRP.

8. The beam recovery method according to claim 6, wherein there is no mapping relationship between the PUCCH resource and the report-receiving TRP, and the step of using the first beam to send the beam failure event to the report-receiving TRP on the PUCCH resource is as follows:
according to resource index value, a first PUCCH resource is selected to carry the beam failure event, and the first beam is used to transmit the PUCCH to the report-receiving TRP.

9. The beam recovery method according to claim 1, wherein the beam failure event is a TRP transmission beam failure.

10. A beam recovery method in a multi-TRP system, **characterized in that** the method is performed at a base station end, comprising:
configuring at least one SR resource;
receiving a beam transmission failure event reported by a user equipment, and reconfiguring a transmission beam of a TRP corresponding to the beam transmission failure event.

11. The beam recovery method according to claim 1, wherein the number of the SR resources is the same as the number of TRPs.

12. The beam recovery method according to claim 1, wherein the SR resource is configured by RRC or acquired by the core network.

13. The beam recovery method according to claim 1, before the step of receiving the beam transmission failure event reported by the user equipment and reconfiguring the transmission beam of the TRP corresponding to the beam transmission failure event, further comprising:
detecting a scheduling request reported by the user equipment;
configuring at least one PUCCH resource for the user equipment based on the scheduling request.

14. The beam recovery method according to claim 13, wherein the PUCCH resource and TRP have a corresponding relationship.

15. A beam recovery method in a multi-TRP system, wherein the method is performed on a user equipment side, comprising:
sending a scheduling request to a first cell according to a type of a cell to which a TRP where the event occurs belongs when detecting a TRP-level beam transmission failure event;
receiving an uplink grant of a first PUSCH transmission issued by the first cell;
transmitting a MAC CE carrying TRP-level BFRQ to the first cell on a first PUSCH resource.

16. The beam recovery method according to claim 15, wherein the type of the cell to which the TRP belongs includes a secondary cell, a primary cell, and a primary secondary cell.

17. The beam recovery method according to claim 15, wherein the first cell includes a primary cell and a primary secondary cell.

18. The beam recovery method according to claim 2, wherein the type of the cell to which the TRP belongs is a secondary cell, and the step of transmitting the MAC CE carrying the TRP-level BFRQ to the first cell on a first PUSCH resource further comprises: receiving a beam failure recovery response from the secondary cell.

19. The beam recovery method according to claim 16, wherein the cell type of the TRP is the primary cell/primary secondary cell, and after the step of transmitting the MAC CE carrying the TRP-level BFRQ to the first cell on the first PUSCH resource, the method further comprises:
receiving a beam failure recovery response from the primary cell/primary secondary cells.

20. The beam recovery method according to claim 1, wherein the information carried by the MAC CE includes an index value of the TRP in which beam failure occurred, a carrier component CC index value, a new candidate beam indication, and a first identifier indicating whether a new candidate beam is found or not.

21. The beam recovery method according to claim 15, wherein information carried by the MAC CE further includes BFRQ messages of two TRPs.

22. The beam recovery method according to claim 15, wherein the information carried by the MAC CE further includes a BFRQ message specifying a TRP.

23. The beam recovery method according to claim 15, wherein before the step when detecting a TRP-level beam transmission failure event, the method further comprises:
receiving the beam failure detection reference signal BFD-RS and the new beam identification reference signal NBI-RS configured by higher layer signaling.

24. The beam recovery method according to claim 1, wherein before the step of receiving the uplink grant of the first PUSCH transmission issued by the first cell, the method further comprises:
receiving an uplink grant for MAC CE transmission;
reporting BSR to the first cell through the MAC CE.

25. A beam recovery method in a multi-TRP system, **characterized in that** the method is performed at a base station end, comprising:
receiving a BFRQ message reported by a user equipment;
reconfiguring a transmission beam of at least one TRP according to the BFRQ message.

26. The beam recovery method according to claim 11, wherein after receiving the BFRQ message reported by the user equipment, the method further comprises:
scheduling a new PUSCH through the PDCCH as a response to the reported BFRQ message.

27. The beam recovery method according to claim 26, wherein a HARQ process index value of the new PUSCH is the same as a HARQ process index value of the reported BFRQ PUSCH and an NDI value is inverted.

28. The beam recovery method according to claim 25, wherein the step of reconfiguring the transmission beam of at least one TRP according to the BFRQ message comprises:
the BFRQ message being a BFRQ message of one TRP, performing beam reconfiguration on the TRP, and reusing the configuration to at least one other TRP.

29. A beam recovery method in a multi-TRP system, **characterized in that** the method is performed on a user equipment side, comprising:
obtaining a new candidate beam when detecting a beam transmission failure event;
selecting a PRACH resource corresponding to the new candidate beam, and transmitting the beam transmission failure event to a base station on the PRACH resource.

30. The beam recovery method according to claim 29, wherein the beam transmission failure event is a beam transmission failure event of two TRPs, and the step of selecting the PRACH resource corresponding to the new candidate beam, and transmitting the beam transmission failure event to the base station on the PRACH resource comprises:
selecting a PRACH resource corresponding to a new candidate beam of the first TRP, and reporting the beam transmission failure event of the first TRP on the PRACH resource;
monitoring a beam recovery response of the base station;
selecting a PRACH resource corresponding to a new candidate beam of the second TRP if the beam recovery response is obtained, and reporting the beam transmission failure event of the second TRP on the PRACH resource.

31. A beam recovery method in a multi-TRP system, **characterized in that** the method is performed at a base station end, comprising:
obtaining a new candidate beam reported by a user equipment through a detected PRACH;
reconfiguring a transmission beam of at least one TRP according to the new candidate beam.

32. The beam recovery method according to claim 31, wherein the step of reconfiguring the transmission beam of at least one TRP according to the new candidate beam comprises:
reconfiguring a transmission beam of a TRP corresponding to the new candidate beam according to the new candidate beam, and
reusing beam configuration of the TRP to at least one other TRP.

33. A communication device, **characterized in that** it comprises a processor and a communication circuit, the processor is connected to the communication circuit, and the processor is configured to execute instructions to implement the methods of claims 1-9, 15-24, and 29-30.

34. A communication device, **characterized in that** it comprises a processor and a communication circuit, the processor is connected to the communication circuit, and the processor is configured to execute instructions to implement the methods of claims 10-14, 25-28, and 31-32.

35. A readable storage medium storing instructions, comprising: instructions executable to implement the method according to claims 1-32.
